Europäisches Patentamt

European Patent Office

Office européen des brevets

(11) Numéro de publication: **0 000 294**
**B1**

(12) **FASCICULE DE BREVET EUROPEEN**

(21) Numéro de dépôt: 78400002.8

(22) Date de dépôt: 01.06.78

(51) Int. Cl.³: **B 23 Q 1/26**

(54) **Dispositif de retrait d'outil sur machine-outil**

(30) Priorité: 27.06.77 FR 7719614

(43) Date de publication de la demande:
10.01.79 Bulletin 79/01

(45) Mention de la délivrance du brevet:
29.10.80 Bulletin 80/22

(84) Etats contractants désignés:
CH DE GB SE

(56) Documents cités:
DE - A - 2 061 987
DE - A - 2 136 798
DE - A - 2 409 721
DE - B - 1 072 863
FR - A - 1 588 597
GB - A - 876 703
US - A - 3 622 247

(73) Titulaire: REGIE NATIONALE DES USINES
RENAULT
Boite postale 103 8 - 10 avenue Emile Zola
F - 92109 Boulogne-Billancourt (FR)

(72) Inventeur: Marty, Gabriel
20, rue Goya
F - 81 Castres (FR)

(74) Mandataire: Kessler, Michel et al
RNUR - S. 0804 B.P. 103
F - 92109 Boulogne - Billancourt (FR)

Courier Press, Leamington Spa, England.

Dispositif de retrait d'outil sur machine-outil

L'invention, due à la collaboration de M. MARTY GABRIEL, se rapporte au problème du retrait d'outil sur les machines-outils où l'on désire, en fin d'usinage, éviter de raver la surface usinée lors de la course relative de dégagement pièce-outil

On connait, une demande de brevet allemand, publiée après examen n° 1.072.863 ALFING qui, pour résoudre ce même problème, utilise le jeu des paliers hydrostatiques d'une broche pour obtenir, par un déport radial de la broche sur de tels paliers, le dégagement pièce-outil.

Toutefois, cette solution impose le recours à des paliers hydrostatiques.

La présente invention a pour objet une solution avantageuse mettant à profit un agencement courant de machine, pour ce faire.

Essentiellement, dans une machine comprenant un ensemble mobile de support de l'outil ou de la pièce ayant un guidage à rattrapage de jeu par sollicitation latérale, le dispositif de retrait d'outil, selon l'invention, est caractérisé en ce qu'il comporte des moyens destinés à déplacer latéralement ledit ensemble mobile à l'écart et à l'opposé de sa position de rattrapage de jeu du guidage pour écarter l'outil de la pièce après usinage dans la position de rattrapage de jeu, l'outil restant dans cette position.

Une telle solution est particulièrement avantageuse sur les machines à broche porte-outil(s) pour usinage d'intérieur, telles que les aléseuses, dans lesquelles la broche est indexable manuellement ou peut être soumise à un dispositif d'indexage angulaire d'arrêt en fin d'usinage, car il suffit, alors, de prévoir un indexage d'outil(s) en un plan approximativement parallèle à celui du rattrapage de jeu précité et dans le même sens que celui-ci préalablement à la mise en oeuvre des moyens précités, utilisés pour écarter l'outil de la pièce.

Il est à voir qu'en ce cas les dispositifs de retrait d'outil(s) sont peu commodes à incorporer dans des broches porte-outil(s) sauf dans le cas du brevet précité et constituent une servitude coûteuse en comparaison de celle objet de l'invention inhérente à la machine.

En particulier, dans une machine à guidage à rattrapage de jeu par poussoirs pneumatiques, les moyens destinés à écarter le ou les outils de la pièce peuvent être simplement constitués par des poussoirs pneumatiques opposés aux précédents et actionnables à leur place.

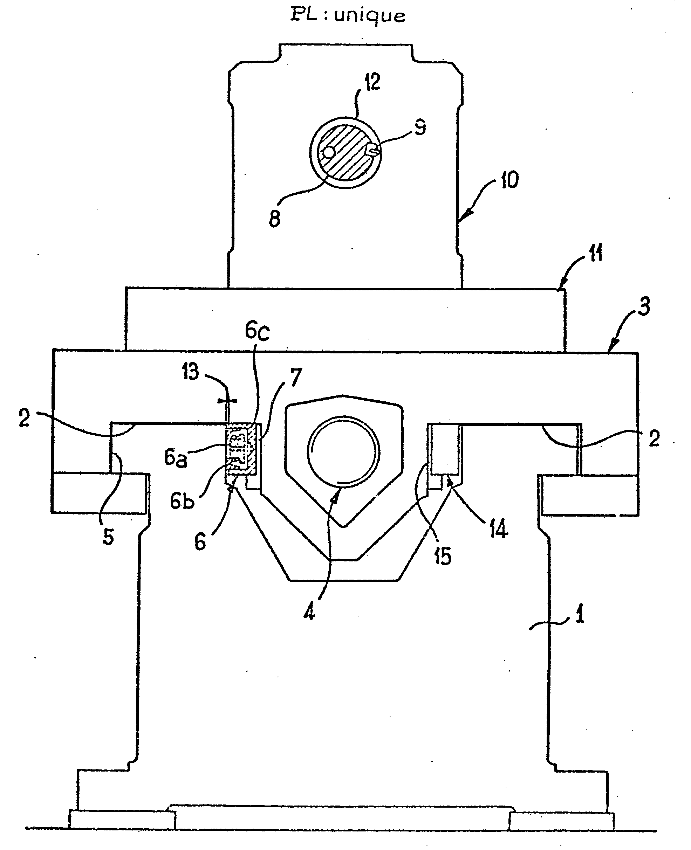

Une forme de réalisation d'un dispositif de retrait d'outil sur machine-outil conforme à l'invention est ci-après décrite, à titre d'exemple, et en référence au jessin annexé, dans lequel la figure unique est une vue en bout et coupe transversale partielle d'une machine-outil à dispositif de rattrapage de jeu et de retrait d'outil pneumatique.

La machine-outil représentée comprend un socle 1 pourvu de glissières horizontales 2 sur lesquelles est montée, déplaçable, une table 3 qui est entraînée par l'intermédiaire d'un mécanisme à vis-écrou 4, dont la vis motrice tourillonne dans le socle, tandis que l'écrou est solidaire de la table.

Un flanc tombant de la table 3 est, en outre, guidé latéralement sur le flanc 5 de l'une des glissières 2 contre lequel le flanc de table est maintenu appuyé sous une certaine force, par un dispositif de rattrapage de jeu, ici, constitué par au moins deux poussoirs pneumatiques 6 disposés de façon espacée sur le socle 1, face à une glissière latérale 7 rapportée sue la table 3 et evec laquelle ils coopèrent à friction. Chaque poussoir 6, comme celui représenté en coupe au dessin, comprend un embout de raccordement 6a à une canalisation d'air comprimé non représentée, ménagée dans la partie adjacente du socle et, autour de cet embout, un joint à lèvre 6b sur lequel peut coulisser de façon étanche une tête poussoir 6c.

La machine-outil considérée est, ici, une aléseuse dont seule la broche tournante porte-outil est figurée en 8 avec son outil d'alésage en 9. Le porte-broche motorisé, non représenté, pouvant comprendre un dispositif d'indexage angulaire de la broche qui peut être d'un type quelconque connu, est fixé sur la table 3 tandis que la pièce à usiner 10 est fixée pour l'usinage sur un plateau 11 solidaire du socle 1, cet usinage consistant, ici, en une opération d'alésage d'un trou 12 ménagé sur la pièce 10.

On notera que la tête poussoir 6c de chaque poussoir pneumatique 6 est, dans sa position de rattrapage de jeu entre le flanc de table et le flanc 5, séparée du socle 1 par un léger jeu 13 qui peut être de l'ordre de un à quelques dixièmes de millimètre.

En position opposée aux poussoirs 6, sont disposés, de même, des poussoirs pneumatiques 14 identiquement alimentables en air comprimé par une canalisation non représentée, ménagée dans la partie adjacente du socle 1, ces poussoirs coopérant avec une glissière latérale 15 rapportée sur la table.

Ainsi, on comprend aisément qu'en fin d'usinage, pour obtenir un retrait de l'outil 9 par rapport à la pièce 10 avant extraction de la broche porte-outil 8 hors du trou alésé 12, il suffit d'indexer l'outil 9 en la position angulaire représentée au dessin, voisine de l'horizontale, et orientée dans le sens de la sollicitation latérale de rattrapage de jeu, puis d'alimenter en air comprimé les poussoirs pneumatiques 14 tandis que ceux de rattrapage de jeu 6 sont mis à l'échappement, de sorte que l'ensemble table 3, porte-broche et broche porte-outil 8, 9, est alors décalé du jeu 13 à l'inverse de la position de l'outil 9, et que ce dernier se trouve ainsi décalé par rapport au trou alésé 12 dont il peut être retiré avec la broche sans risque de rayer l'alésage effectué.

Pour l'usinage de la pièce suivante, l'alimentation pneumatique des poussoirs 6, 14 est de nouveau inversée avant usinage et ainsi de suite.

Il va de soi que la présente invention est applicable avec tout autre dispositif de guidage à rattrapage de jeu latéral d'un ensemble mobile de support d'outil ou de pièce dans une machine-outil, quelle qu'en soit la structure, mécanique à ressort ou à fluide sous pression.

## Revendications

1. Dispositif de retrait d'outil par rapport à une pièce usinée sur machine-outil, comprenant un ensemble mobile de support de l'outil ou de la pièce ayant un guidage de déplacement rectiligne à rattrapage de jeu par sollicitation latérale, caractérisé en ce qu'il comporte des moyens destinés à déplacer latéralement ledit ensemble mobile à l'écart et à l'opposé de sa position de rattrapage de jeu du guidage pour écarter l'outil de la pièce après usinage dans la position de rattrapage du jeu, l'outil restant dans cette position.

2. Dispositif de retrait d'outil, selon la revendication 1, pour machine-outil à broche porte-outil tournante indexable, caractérisé en ce qu'il est prévu un indexage de l'outil en un plan approximativement parallèle à celui du rattrapage de jeu préalablement à la mise en oeuvre des moyens précités, utilisés pour écarter l'outil de la pièce.

3. Dispositif de retrait d'outil, selon l'une des revendications précédentes, dans lequel le guidage à rattrapage de jeu comprend des poussoirs pneumatiques, caractérisé en ce que lesdits moyens destinés à écarter l'outil de la pièce sont constitués par des poussoirs pneumatiques opposés aux précédents et actionnables à leur place.

## Claims

1. An apparatus for retracting the tool from a piece being machined on a machine-tool, comprising a movable assembly supporting the tool or the piece, having guiding means for rectilinear displacement with means for taking up play by lateral biasing, characterized by the fact that it includes a device enabling the lateral displacement of the said movable assembly away and oppositely from its taking up play guiding position, in order to separate the tool in the taking up play position from the piece after its machining, the tool remaining in the same orientation.

2. An apparatus for retraction of the tool, as in claim 1, for a machine-tool with an indexible tool-holding spindle, characterized by the fact that it is provided with indexing of the tool in a plane approximately parallel to that of the taking up of play, prior to activation of the said means utilized for retracting the tool from the piece.

3. An apparatus for retraction of the tool as in one of the foregoing claims, in which the guiding means with means for taking up play comprises pneumatic drivers, characterized by the fact that the said means for retracting the tool from the piece consist of pneumatic drivers opposed to the preceding ones and activatable in their place.

## Patentansprüche

1. Einrichtung zum Abheben des Werkzeuges vom an einer Werkzeugmaschine bearbeiteten Werkstück, bestehend aus einer beweglichen Trageeinheit für Werkzeug bzw. Werkstück, versehen mit einer Führung zur geradlinigen Verschiebung mit Spielausgleich durch seitlichen Druck, dadurch gekennzeichnet, daß sie Mittel aufweist, um besagte, bewegliche Einheit in Abweichung von und entgegengesetzt zu deren Führungsspielausgleichslage mit dem Zweck so zu verschieben, nach Bearbeitung das Werkzeug vom Werkstück weg in die Spielausgleichlage zu bringen, wobei das Werkzeug in besagter Lage bleibt.

2. Einrichtung zum Abheben des Werkzeuges nach Anspruch 1 für Werkzeugmaschinen mit schaltbarer Drehspindel als Werkzeughalter, dadurch gekennzeichnet, daß ein Indexierschalten des Werkzeuges in einer zur Ebene des Spielausgleichs annähernd parallel verlaufenden Ebene noch vor Einsatz vorgenannter Mittel zum Abheben des Werkzeuges vom Werkstück vorgesehen ist.

3. Einrichtung zum Abheben des Werkzeuges nach einem der vorgenannten Ansprüche, bei der die Spielausgleichführung Pneumatikstößel aufweist, dadurch gekennzeichnet, daß besagte Mittel zum Abheben des Werkzeuges vom Werkstück aus Pneumatikstößeln bestehen, die den vorgenannten entgegengesetzt angeordnet und an deren Stelle betätigbar sind.